Europäisches Patentamt

European Patent Office

Office européen des brevets

(11) Publication number: **0 174 944**
**B1**

(12) **EUROPEAN PATENT SPECIFICATION**

(45) Date of publication of patent specification: **12.07.89**

(21) Application number: **85901051.4**

(22) Date of filing: **21.02.85**

(86) International application number:
**PCT/HU85/00009**

(87) International publication number:
**WO 85/03619 29.08.85 Gazette 85/19**

(51) Int. Cl.⁴: **A 01 C 21/00,** A 01 C 23/00,
A 01 G 25/00, C 05 F 11/08

(54) **METHOD FOR DEVELOPING AND INCREASING, RESP. THE FERTILITY OF SOIL.**

(30) Priority: **24.02.84 HU 75584**

(43) Date of publication of application:
**26.03.86 Bulletin 86/13**

(45) Publication of the grant of the patent:
**12.07.89 Bulletin 89/28**

(84) Designated Contracting States:
**DE GB**

(56) References cited:
**AT-B- 227 460**
**DE-B-2 347 838**
**FR-A-2 152 299**
**FR-A-2 478 427**
**GB-A- 401 257**
**HU-A- 174 397**
**US-A-4 336 051**

(73) Proprietor: **VAROSEPITESI TUDOMANYOS ES
TERVEZO INTEZET
Krisztina körut 99
H-1016 Budapest (HU)**

(72) Inventor: **PLOSZ, Sándor
Ozike u 27
H-1121 Budapest (HU)**
Inventor: **KOMAROMIP, Zsuzsa
Remetehegyi u 166
H-1037 Budapest (HU)**

(74) Representative: **Dipl.-Ing. Schwabe, Dr. Dr.
Sandmair, Dr. Marx
Stuntzstrasse 16
D-8000 München 80 (DE)**

Courier Press, Leamington Spa, England.

## Description

Technical Field

The invention relates to a method for developing and increasing, resp. the soil fertility.

Background of the Invention

It is known that the lack of the natural productivity of skeletal soils such as waste land, waste stockpiles is traceable decisively to the lack of humus materials and to the unfavourable economy of water-supplies. In case of the traditional irrigation — "water culture" — of the soils of inferior fertility, several problems arise, as a result of the irrigation the soil becomes leached, secondary salinization begins, the humus materials and plant nutrients get eroded which result in the further decrease of the fertility and unprofitable cultivation.

The economy of water supplies of the soil of deserts, semi-deserts and waste stockpiles, respectively, is generally poor which is traceable to the lack of humus. A further problem can be caused by the absence of suitable irrigation water.

The environment contaminating effect of some waste stockpiles appears also in the contamination of the receptive waters and subsoil water, resp. as by washing the surface the infiltrating water and subsoil water become contaminated.

By the cultivation of these waste stockpiles this contaminating effect can only be moderated.

In the developing countries it is very difficult to carry out the traditional complex ground recultivation method [drawing areas into cultivation] because of different technical and economic problems.

The problems connected with the recultivation are the following:

— the lack of suitable irrigation water,

— the natural soil productivity decreasing effect of irrigation farming, leaching of the humus materials,

— in case of irrigation farming on poor quality soils the plant nutrients get eroded by water, they are poorly utilized,

— by the cultivation of waste stockpiles the problem of environment contamination in a given case is only partially solved.

From US—A—4 336 051 a method is known for developing and increasing the fertility of the soil by irrigating the soil with a mixture of water, soil algae and plant nutrients.

The object of the present invention is to develop and steadily increase the soil fertility and to decrease the environment contaminating effects in a technological process [irrigation].

Disclosure of the Invention

Subject of the present invention is a method for developing and increasing the soil fertility according to the claim.

The process according to the present invention is based upon the recognition that the combination of the irrigation technology and the multiplication of soil-algae lead to surprising, unexpected good results.

According to the present invention the crude water is optionally pre-treated, namely if it is needed, it is transformed into water suitable for irrigation purposes. The presence of the plant nutrients in the irrigation water and the nutrient supply, resp., are preferably continuously ensured by the multiplication of algae on the plant nutrients.

There are several well-known biotechnical procedures which solve some parts of the given complex problem.

According to the present invention a procedure with large variational possibility is elaborated which is suitable to solve the whole problem and not only certain parts and which can be widely used except the cold climatic zones.

The basic requirement of the present procedure is a water suitable for irrigating purposes and any other crude water which is poor in sodium and chlorid ions, resp.

According to the invention optionally a water cleaning operation is carried out as a pre-treatment according to the Hungarian patent specification No. 174 397. This procedure must be done in case of waters which do not contain NaCl and the essence of the treatment is that the crude water to be cleaned is led into an aquatic plant stand, thus an irrigation water of suitable quality is obtained.

Our results show that the aquatic plant stand is suitable for decreasing the total salt content of waters, adjusting the neutrality of water, enriching the humic matters to a certain degree but its fundamental function is to make "living water" from crude-water. The efficiency of the procedure is verified by experiments but in each case the material to be extracted or neutralized must be tested and the spreading of the absorbing, accumulating plant species must be assured.

In given case in the lack of other possibilities a marsh controlled or developed for this purpose can be suitable as well.

In the course of the procedure according to the present invention the irrigation water is subsequently enriched with plant nutrients.

The fertilization with organic materials in certain cases involves difficulties, in case of nomadic stock-raising or at recultivation processes the enrichment of organic substances is very expensive. If the water of irrigation water quality is allowed to flow through an organic material, e.g. compost, soluble organic and inorganic materials are dissolved from the organic material and solid pieces of the size suitable for irrigation technology are taken along as well. By treating the organic material with artificial fertilizer the inorganic plant nutrients will be also spread with the irrigation water. The enrichment can be advantageously carried out with a grated container. In a simpler environment the saprobity of water can be enhanced by the enrichment of organic material in a lake regulated for this purpose. The enrichment of the organic material can be carried out e.g. by the addition of a dilute manure. Before this procedure it is to be examined what kind of water quality and organic material content are needed by the plant to be cultivated.

The essential feature of the process according to the invention is the humus forming, the enrichment with soil-algae.

This operation is the process of natural humus forming, caused artificially and in a way which is most favourable from the point of view of the intentions of the process. By the multiplication of a soil alga strain having suitable productivity the formation of natural organic substances begins.

The plant nutrients enrichment described previously which was mentioned before the humus enrichment with algae, can be carried out optionally in an inverted order that is after the enrichment with the algae or both can be carried out at the same time.

After the enrichment with the algae the presence of plant nutrients for the irrigation method are ensured.

It is known that the nutrition retain capability of the skeletal soil is unfavourable. The inorganic fertilizers get eroded or leak into the deeper layers of the soil. It is furthermore known that the plants synthesize organic substances from inorganic fertilizers in the presence of light. Consequently, if algae are formed on the plant nutrients in basins or pools the nutrient or a part of it can be passed to the fields in the form of organic substances. For this purpose the appropriate floating alga strain has to be selected or alga strains which can be multiplicated on the soil are used. The alga producing basin or pool can be used as a secondary utilization for fish breeding, where the metabolites of the fishes increase the organic substance content of the irrigation water. The advantage of some sort of blue/green algae is that they absorb the air nitrogen, so their use results in nutrition saving. A further amount of energy can be saved by adding the nutritive element phosphorus in the form of phosphoric acid or crude phosphate instead of a fertilizer.

The result of this step of the process is that a slowly decomposing nutrient is ensured to the crop plants, leaching is decreased, the humus content is increased and the soil structure is improved.

For carrying out the procedure simple alga producing basins or a lake constructed for this purpose should be made which can be combined, e.g. with a fish pond.

The figures serve the better understanding of the process.

Figure 1 shows the treatment of crude water according to Hungarian Patent Specification No. 174 397;

Figures 2a and 2b show the scheme of water introduction suitable for the irrigation process;

Figure 3 shows the system of the humus formation, enrichment with soil algae;

Figure 4 shows the replacement of plant nutrients;

Figure 5 shows the "peg" plantations for the nutrient replacement;

Figure 6 shows the cleaning of subsoil water and infiltrating water;

Figurs 7a to 7h show the combinations of the process according to the invention.

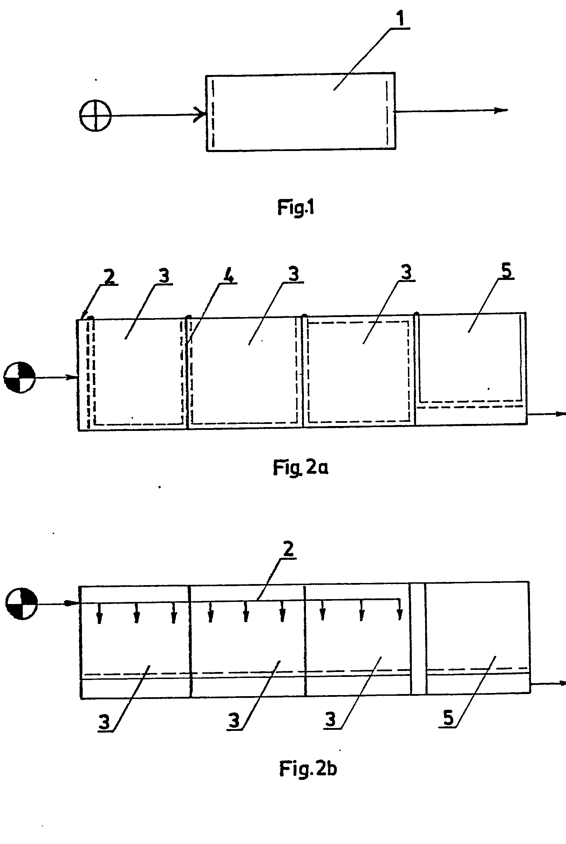

Figure 1 shows the treating and cleaning of the crude water which is unsuitable for irrigation according to the Hungarian Patent Specification No. 174 397. In accordance with Figure 1 the crude water to be treated — marked with an arrow on the Figure — is led into the aquatic plant-stand 1. The cleaned water which leaves the aquatic plant-stand is also marked with an arrow. In this way the salt content of the crude water which is unsuitable for irrigation, decreases, the pH reaches the normal level, the water is enriched in humic materials namely after all a "living water" is obtained which is suitable for irrigation. This pre-cleaning procedure which has to be done when required is marked as step I.

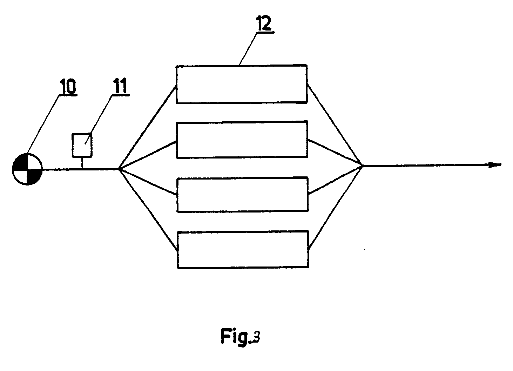

Figure 2a shows that the nutrient water [marked with arrow] of irrigation quality is passed — practically through the divided water intake 2 — into the organic material, e.g. compost storing grated container system — between them, there is a carrier plate 4, then from the filter container 5 it is led in the direction of the arrows.

Figure 2b shows a slightly different embodiment of the system.

This is step II of the procedure according to the present invention which shows the plant nutrients enrichment; the water applied to irrigation technology in this step is enriched with soluble organic and inorganic materials [eventually liquid manure may be added]. In this step the application of the solid pieces of a size suitable for irrigation technology and by inorganic fertilizing the needed inorganic material content is ensured.

In step III the plant nutrients are placed.

Fig. 3 shows step III. The nutrient water is passed through the water feeder 10, the nutritive material through the material feeder 11 into the algae breeding pools 12 or lake. The irrigation water [with algae] leaves the pools in the direction of the arrow.

In this step the nutritive material is synthesized in the form of decomposing organic material. The advantages of this solution are that the erosion decreases, the humus content increases, the inclination to secondary solodization decreases, and the water treated in this way promotes and improves the development of the soil structure, respectively.

**Claim**

Method for developing and increasing, respectively, the soil fertility by inoculating the soil with a soil algae and irrigating the soil with a mixture of water, soil algae and plant nutrients, characterized in that it uses directly for the irrigation of the soil from time to time or constantly an irrigation water, which is cleaned to make it suitable for irrigation purposes, in which the plant nutrients are treated with algae, preferably with a blue algae strain, in an alga producing basin or pond and applying the water containing algae to the area to be irrigated.

**Patentanspruch**

Verfahren zur Entwicklung bzw. Erhöhung der Fruchtbarkeit des Bodens, bei dem man den Boden mit einer Bodenalge inokuliert und den Boden mit einer Mischung aus Wasser, Bodenalgen und Pflanzennährstoffen berieselt, dadurch gekennzeichnet, daß man direkt zur zeitweisen oder konstanten Berieselung des Bodens ein Berieselungswasser verwendet, das gereinigt wurde, um es für Berieselungszwecke geeignet zu machen, in dem man die Pflanzennährstoffe mit Algen, vorzugsweise mit einem Blaualgenstamm, in einem eine Alge produzierenden Becken oder Teich behandelt und das algenhaltige Wasser auf die zu berieselnde Fläche aufbringt.

**Revendication**

Procédé pour le développement et d'accroissement de la fertilité du sol par inoculation dans le sol d'une algue de sol et par irrigation du sol avec un mélange d'eau, d'algues de sol et d'aliments pour plantes, caractérisé en ce qu'on emploie directement pour l'irrigation du sol, de temps en temps ou constamment, une eau qui a été purifiée afin de la rendre propre à des fins d'irrigation et dans laquelle les aliments pour plantes sont traités aux algues, de préférence avec une souche d'algues bleues, dans un bassin ou étang de culture d'algues, et en ce qu'on administre cette eau chargée d'algues à la surface à irriguer.

Fig.1

Fig. 2a

Fig.2b

**Fig.**3